# EUROPÄISCHE PATENTSCHRIFT

(11) **EP 1 790 678 B1**
(45) Veröffentlichungstag und Bekanntmachung des Hinweises auf die Patenterteilung: **07.10.2009**
(21) Anmeldenummer: 06023775.7
(22) Anmeldetag: 15.11.2006
(51) Int. Cl.: C08G 65/26

(54) **Verfahren zur Herstellung von Polyolen auf Basis natürlicher Öle**
Process for manufacturing polyols based on natural oils
Procédé pour la préparation de polyols à base d' huiles naturelles

(30) Priorität: 26.11.2005 DE 102005056432
(43) Veröffentlichungstag der Anmeldung: 30.05.2007
(73) Patentinhaber: Bayer MaterialScience AG, 51368 Leverkusen (DE)
(72) Erfinder: Lorenz, Klaus, Dr., 41539 Dormagen (DE)

(56) Entgegenhaltungen:
- EP-A2- 1 588 999
- DE-A1- 19 812 174

## Beschreibung

Der Gegenstand der vorliegenden Erfindung betrifft ein Verfahren zur Herstellung von Polyolen auf Basis natürlicher ungesättigter Öle.

Polyole auf Basis nachwachsender Rohstoffe wie Fettsäuretriglyceriden, Zucker, Glycerin und Dimerfettalkoholen werden bereits in vielfältiger Weise als Rohstoff bei der Herstellung von Polyurethanwerkstoffen verwendet. In Zukunft wird sich der Einsatz solcher Komponenten weiter verstärken, da Produkte aus erneuerbaren Quellen in Ökobilanzen vorteilhaft bewertet werden und die Verfügbarkeit von Rohstoffen auf petrochemischer Basis auf lange Sicht abnehmen wird. Fettsäuretriglyceride werden in großer Menge aus nachwachsenden Quellen gewonnen und bilden daher eine preiswerte Basis u. a. für Polyurethanrohstoffe. Ein Nachteil ist der Mangel an Fettsäuretriglyceriden, welche bereits die für die Umsetzung mit Isocyanaten notwendigen reaktiven Wasserstoffatome mit sich bringen. Als Ausnahme ist in diesem Zusammenhang an erster Stelle Rizinusöl zu nennen, ferner besitzt auch das seltene Lesquerellaöl Hydroxygruppen. Die Verfügbarkeit von Rizinusöl ist jedoch beschränkt aufgrund räumlich begrenzter Anbaugebiete.

Die für den Einsatz in der Polyurethanindustrie notwendigen reaktiven Wasserstoffatome müssen demnach mittels chemischer Verfahren in die allermeisten natürlich vorkommenden Öle eingeführt werden. Hierzu existieren nach dem herrschenden Stand der Technik im Wesentlichen Methoden, die sich die in den Fettsäureestern zahlreicher Öle vorkommenden Doppelbindungen zunutze machen, ferner werden auch Methoden zur Freisetzung von Glycerin aus den Triglyceriden beschrieben. Um diese Polyole in Bezug auf Molmasse und Grenzflächenspannung zu modifizieren, ihre Verträglichkeit mit konventionellen Polyethern zu erhöhen bzw. ihr Verarbeitungsverhalten dem konventioneller Polyole anzugleichen, werden auch Umsetzungen mit Alkylenoxiden beschrieben. Der Stand der Technik stellt sich dar wie folgt:
US-A 2002/0058774 beschreibt die Herstellung mehrfunktioneller Polyole auf Basis unmodifizierter oder geblasener Öle. Die Produkte werden in einem zweistufigen Umesterungsverfahren aus dem Öl und mehrfunktionellen Alkoholen und Sacchariden erhalten. Eine säurekatalysierte Reaktion wird in US-A 2002/0058774 nicht beschrieben.
US-A 2003/0191274 beansprucht in einem Zweistufenprozess aus unmodifizierten oder geblasenen Ölen und Zuckern sowie Glycerin erhaltene Umsetzungsprodukte als Starterkomponenten für Alkoxylierungsreaktionen. Säurekatalysierte Epoxidierungen und Epoxidringöffnungen werden in US-A 2003/0191274 nicht beschrieben.

In WO-A 2004020497 wird die Verwendung von Doppelmetallcyanidkomplex- (DMC-) katalysatoren bei der Herstellung von Alkylenoxidaddukten auf Basis von Starterkomponenten aus nachwachsenden Quellen beansprucht. Als bevorzugte Starterkomponente wird Rizinusöl eingesetzt, verwendbar sind auch nachträglich mit Hydroxygruppen modifizierte Öle. Die Patentschrift gibt keinerlei Aufschluss darüber, wie mit einfachen Mitteln solche zur Alkoxylierung geeigneten hydroxygruppenmodifizierten Öle in situ erhalten werden können.

US-B 6686435 beansprucht die Umsetzung epoxidierter Öle mit Alkohol- / Wassergemischen unter Katalyse von HBF₄ zum Zwecke der Ringöffnung und des Erhalts von Hydroxygruppen. Die Epoxidierungsreaktion kann der Ringöffnungsreaktion auch direkt vorgeschaltet werden. Eine anschließende Umsetzung dieser Produkte mit Alkylenoxiden zu Polyetherpolyolen sowie die säurekatalysierte Epoxidierung werden in US-B 6686435 nicht beschrieben.

In EP-A 1112243 wird die Herstellung von für die Alkoxylierung von Fettalkoholen geeigneten geträgerten DMC-Katalysatoren beschrieben, welche nach erfolgter Umsetzung des Starters mit dem Alkylenoxid abgetrennt werden können. Die Herstellung der Fettalkohole wird in EP-A 1112243 nicht offenbart.

EP-A 0259722 behandelt die säurekatalysierte Ringöffnung von Oxiranringen an epoxidierten Fettsäuretriglyceriden mit niedermolekularen monofunktionellen Alkoholen. Solchermaßen erhaltene Polyole können ggf. noch weiter alkoxyliert werden, hierzu fehlen jedoch Angaben über geeignete Reaktionsbedingungen.

JP-A 05163342 beansprucht die Alkoxylierung von Rizinusöl oder modifiziertem Rizinusöl in Ggw. von DMC-Katalysatoren. Wie diese modifizierten Ricinusöle erhalten werden, wird in JP-A 05163342 nicht beschrieben.

In DE-A 3323880 wird erläutert, wie Rizinusöl oder modifiziertes Rizinusöl mit Alkylenoxiden unter Katalyse von Lewissäuren oder Doppelmetallcyanidkomplexen zu Polyetherpolyolen umgesetzt werden kann. Der Darstellung modifizierter Rizinusöle wird jedoch nicht beschrieben.

US-A 2002/0099230 beschreibt Lewissäuren wie Tetrabutyltitanat oder Triphenylphosphit als Katalysatoren für die Umsetzung epoxidierter Öle mit Alkoholen, Aminen oder Alkanolaminen. Die weitere Umsetzung dieser Produkte mit Alkylenoxiden wird nicht beschrieben.

In DE-A 19812174 werden Umesterungsprodukte aus Fettsäuretriglyceriden und mehrwertigen Alkoholen beschrieben, die nachträglich alkoxyliert werden. Säurekatalysierte Epoxidierungen und Epoxidringöffnungen werden in DE-A 19812174 nicht beschrieben

US-B 420443 beansprucht Alkylenoxidaddukte aus Fettsäuretriglyceriden als Verträglichkeitsvermittler in kohlenwasserstoffgetriebenen Hartschaumstoffformulierungen. Solche Alkylenoxidaddukte umfassen neben Reaktionsprodukten aus Rizinusöl und Alkylenoxiden auch solche aus ringgeöffneten epoxydierten Fettsäuretriglyceriden und Alkylenoxiden. Einfache Reaktionswege von den unmodifizierten Fettsäuretriglyceriden über deren in situ Epoxydierung / Ringöffnung hin zu den entsprechenden Alkylenoxidadditionsprodukten werden nicht aufgezeigt.

DE-A 19545165 beschreibt die Verwendung von Ringöffnungsprodukten epoxydierter Triglyceride als zellöffnende Komponente in Polyurethanhart- und -weichschaumstoffformulierungen. Auf Verfahren zum Erhalt dieser Ringöffnungsprodukte sowie aus ihnen nach Alkoxylierung erhältlicher Polyole, wird in DE-A 19545165 nicht eingegangen.

WO-A 2004096883 beschreibt, wie von aus Fettsäuren oder Fettsäureestern über Hydroformylierung / Hydrierung hergestellten methylolgruppenhaltigen Derivaten durch Veresterung oder Umesterurig in Ggw. von mehrfunktionellen Polyolen höherfunktionelle Polyester erhalten werden können, welche als Polyolkomponente in Weichschaumformulierungen eingesetzt werden. Die Epoxidierung von natürlichen Ölen wird in WO-A 2004096883 nicht beschrieben.

In DE-A 4332292 wird die Oxidation von Triglyceriden in Gegenwart von Wasserstoffperoxid und Carbonsäuren beschrieben. Ein Verfahren wie aus den Triglyceriden mit Alkylenoxid umgesetzte Polyetherpolyole hergestellt werden können, wird in DE-A 4332292 nicht offenbart.

Die Aufgabe der vorliegenden Erfindung ist daher ein einfaches Verfahren bereit zu stellen, das es ermöglicht unmodifizierte ungesättigte Fettsäuretriglyceride in mit herkömmlichen Polyethern, welche auf Basis petrochemischer Vorprodukte erhalten werden, verträgliche Alkylenoxidaddukte eines breiten OH-Zahlbereiches zu überführen.

Diese Aufgabe wird gelöst durch ein Verfahren zur Herstellung von Polyolen auf Basis natürlicher Öle, bei dem
a) ungesättigte Triglyceride entweder mit Peroxycarbonsäuren oder mit Wasserstoffperoxid unter Katalyse von Carbonsäuren bei Temperaturen von 20°C bis 90°C oxidiert werden, wobei das Molverhältnis von Wasserstoffperoxid zu den oxidierbaren Doppelbindungsäquivalenten 0,2 - 1,5 und das Molverhältnis der katalytisch aktiven Carbonsäure zu den oxidierbaren Doppelbindungsäquivalenten 0,2- 1,1 beträgt,
b) die gebildeten Epoxidgruppen *in situ* durch Erhöhung der Temperatur auf 90 - 130°C gegebenenfalls unter Zusatz weiterer Polyole in Alkoholgruppen überführt werden,
c) anschließend die unter a) und b) hergestellten Produkte von flüchtigen Bestandteilen im Vakuum bei Temperaturen von 60 - 130°C befreit werden und
d) die unter a) bis c) erhaltenen Produkte ohne weitere Aufarbeitungsschritte mit Alkylenoxiden unter Ringöffnung zu Polyetherpolyolen umgesetzt werden.

Vorteilhaft ist das erfindungsgemäße Verfahren, wenn in Schritt b) zusätzlich noch 100 bis 1000 ppm einer anorganischen Mineralsäure hinzugefügt werden.

Werden im Schritt a) weniger als ein Äquivalent der katalytisch aktiven Carbonsäuren pro eingesetztem Wasserstoffperoxidäquivalent verwendet, ist es von Vorteil, wenn in Schritt b) zusätzlich noch eine weitere oder mehrere weitere Carbonsäuren bis zum Einreichen eines maximalen Verhältnisses von Carbonsäureäquivalenten zu Wasserstoffperoxidäquivalenten von 1,2 eingesetzt werden. Die Zugabe der weiteren Carbonsäure ist unabhängig davon, ob 100 bis 1000 ppm einer anorganischen Mineralsäure hinzu gegeben werden oder nicht.

Vorteilhaft ist das Verfahren dadurch gekennzeichnet, dass das unmodifizierte ungesättigte Fettsäuretriglycerid durch Epoxydierung, Ringöffnung und Alkoxylierung in einem einzigen Reaktionskessel in die gewünschten Produkte überführt werden kann.

Bei dem erfindungsgemäßen Verfahren können zwischenzeitlich anfallende Nebenprodukte bei Bedarf auf einfachste Weise im Vakuum entfernt werden, so dass für nachfolgende Syntheseschritte keine explizite Reinigung erfolgen muss und diese im direkten Anschluss durchgeführt werden können.

Das erfindungsgemäße Verfahren wird im Einzelnen wie folgt durchgeführt:
a), b) Das Triglycerid wird mit einer Peroxycarbonsäure oder einem Gemisch aus Carbonsäure und Wasserstoffperoxid, mit welchem die als Oxidationsmittel wirksame Peroxycarbonsäure *in situ* gebildet und regeneriert wird, oxidiert.
   Als Peroxycarbonsäure sind beispielsweise Peroxyameisensäure, Peroxyessigsäure, Trifluorperoxyessigsäure, Perbenzoesäure, 3,5-Dinitroperbenzoesäure und m-Chlorperberizoesäure verwendbar. Bevorzugt werden Peroxyessigsäure oder Peroxyameisensäure eingesetzt. Die genannten Säuren werden in Mengen von 20 - 100 Mol-% bezogen auf die Doppelbindungsäquivalente des zu oxidierenden Triglycerides eingesetzt. Das Triglycerid wird hierzu in Substanz oder Lösung vorgelegt und die Peroxycarbonsäure langsam bei 20°C bis 90°C, bevorzugt bei 35°C bis 50°C, zugegeben. Nach erfolgter Zugabe wird das Reaktionsgemisch für 4 bis 20 h auf 90°C bis 130°C erwärmt. Bevorzugt wird hierbei ohne Lösungsmittel gearbeitet. Zur Unterstützung der Ringöffnungsreaktion können dem Reaktionsgemisch gegebenenfalls auch katalytische Mengen einer anorganischen Mineralsäure und / oder gegebenenfalls auch Alkohole zugesetzt werden. Durch die geschilderte Reaktionsführung ist gewährleistet, dass die intermediär gebildeten Oxirane durch Ringöffnung direkt und vollständig in Hydroxygruppen überführt werden.
   In einer bevorzugten Ausführungsvariante der Epoxidierungs- / Ringöffnungsreaktion wird die Peroxycarbonsäure *in situ* durch Reaktion der Carbonsäure mit Wasserstoffperoxid erzeugt und bei Oxidation des Triglycerides zurückgebildet. Das Wasserstoffperoxid kann zu der vorgelegten Mischung von Triglycerid und Carbonsäure zudosiert werden, es kann aber auch gleichzeitig mit der Carbonsäure dem Triglycerid portionsweise zugeführt werden. Mit letzterer Verfahrensweise werden bei der Oxidationsreaktion auftretende Exothermien leichter beherrscht. Als Carbonsäure werden bevorzugt Ameisensäure oder Essigsäure verwendet. Andere Carbonsäuren sind hierbei jedoch ebenfalls wirksam; so kann die Oxidation beispielsweise mit Glykolsäure katalysiert werden. Bei der Ringöffnung der Oxirane nicht angebundene Glykolsäurereste können durch thermische Behandlung auf einfache Weise beseitigt werden.
   Es werden 0,2 - 1,1 Carbonsäureäquivalente pro zu oxidierendem Doppelbindungsäquivalent verwendet. Das Verhältnis von Wasserstoffperoxidäquivalenten zu oxidierbaren Doppelbindungsäquivalenten beträgt je nach angestrebtem Oxidationsgrad 0,2 - 1,5. Das Wasserstoffperoxid kann als Lösung in Wasser mit unterschiedlichen Wasserstoffperoxidgehalten eingesetzt werden. Bevorzugt werden Lösungen mit einem Wasserstoffperoxidgehalt von 30 % bis 50 %. Die Zugabe der Reagenzien zum Triglycerid erfolgt langsam bei 35°C bis 80°C. Nach erfolgter Zugabe und Vervollständigung der Epoxidierungsreaktion wird das Reaktionsgemisch für 4 bis 20 h auf 90°C bis 130°C erwärmt. Bevorzugt wird hierbei ebenfalls ohne Lösungsmittel gearbeitet. Zur Unterstützung der Ringöffnungsreaktion können nach erfolgter Epoxidierung dem Reaktionsgemisch gegebenenfalls katalytische Mengen (100 - 1000 ppm) einer anorganischen Mineralsäure und / oder gegebenenfalls Alkohole zugesetzt werden. Überraschenderweise beschleunigen katalytische Mengen der anorganischen Mineralsäure nicht nur in zu erwartender Weise die Ringöffnungsreaktion der Epoxide, die Produkte zeichnen sich darüber hinaus auch durch eine geringere Säurezahl aus, womit sie zum Einen strukturell höher definiert sind und zum Anderen leichter der Alkylenoxidadditionsreaktion d) unterworfen werden können. Werden unterstöchiometrische Mengen, d. h. deutlich weniger als ein Äquivalent der katalytisch wirksamen Carbonsäure pro Wasserstoffperoxidäquivalent eingesetzt, bleibt die Reaktion in Abwesenheit anderer Nucleophile im Wesentlichen auf der Epoxidierungsstufe stehen. Durch Zusatz einer ausreichenden Menge einer anderen Carbonsäure und weiteres Erwärmen auf 90°C bis 130°C kann die Ringöffnungsreaktion der Epoxide vervollständigt werden. Diese Verfahrensweise ermöglicht die Einführung zusätzlicher Funktionalitäten in das hydroxygruppenmodifizierte Triglycerid.
   Beispielsweise können durch Einsatz ethylenisch ungesättigter Carbonsäuren wie Acrylsäure oder Methacrylsäure reaktive Doppelbindungen eingebracht werden. Die Verwendung hydroxygruppenhaltiger Carbonsäuren wie beispielsweise der verschiedenen Isomere der Hydroxybenzoesäure, der Hydroxymethylbenzoesäure, der Dihydroxybenzoesäure, Trihydroxybenzoesäure, Hydroxyphenylessigsäure, Hydroxyphtalsäure, Hydroxynaphthoesäure, Mandelsäure, 2-Hydroxybuttersäure, 3-Hydroxybuttersäure, 3-Hydroxypropionsäure, Tropasäure, Ricinolsäure und Glycerinsäure eröffnet den Zugang zu Triglyceridderivaten mit höheren OH-Zahlen und Funktionalitäten, die bei der Herstellung von halbharten oder harten Polyurethanschaumstoffen bzw. mikrozellulären oder kompakten Polyurethanwerkstoffen bevorzugt eingesetzt werden.
   Alle Triglyceride, deren Säurereste vollständig oder teilweise ungesättigt sind, eignen sich als Substrate für die unter a) und b) beschriebene Reaktionssequenz. Beispielhaft genannt seien Baumwollsaatöl, Erdnussöl, Kokosöl, Leinöl, Palmkernöl, Olivenöl, Maisöl, Palmöl, Rizinusöl, Rapsöl, Sojaöl, Sonnenblumenöl, Heringsöl, Sardinenöl und Talg. Bevorzugt sind-raffinierfes Sojaöl und Rapsöl. Als ggf. in katalytischer Menge zuzusetzender anorganischer Mineralsäure wird bevorzugt Phosphorsäure verwendet. Alkohole, die, wie oben erwähnt, dem Reaktionsgemisch zur Unterstützung der Ringöffnungsreaktion gegebenenfalls ebenfalls zugesetzt werden können, sind beispielsweise Methanol, Ethanol, Ethandiol, 1-Propanol, 2-Propanol, 1,2 und 1,3-Propandiol, 1- und 2-Butanol, die Isomere des Butandiols, Pentanol, Hexanol, Heptanol, Octanol und Decanol. Bevorzugt werden Monole oder monolgestartete Alkylenoxidadditionsprodukte (monofunktionelle Polyetherole) im Molmassenbereich von 32 - 1000 g/mol verwendet.
c) Durch Evakuieren bei 60°C - 130°C können Nebenkomponenten wie Wasser, überschüssige Carbonsäure und gegebenenfalls überschüssiger niedermolekularer Alkohol abgetrennt werden. Die OH-Zahl der so erhaltenen Zwischenprodukte kann, wie oben bereits erwähnt, über die Menge des eingesetzten Oxidationsmittels und / oder die Mitverwendung hydroxygruppenhaltiger Carbonsäuren bei der Ringöffnungsreaktion eingestellt werden. Die OH-Zahl der erhaltenen Zwischenprodukte, liegt bei dem erfindungsgemäßen Verfahren im Bereich von 50 mg KOH / g bis 600 mg KOH / g.
d) Nach dem unter a), b) und c) geschilderten Prozess und seinen Varianten erhältliche hydroxylgruppenmodifizierte Triglyceride können nun nach Zugabe eines Katalysators und Zudosierung von Alkylenoxiden direkt und ohne weitere Aufarbeitung Alkoxylierungsreaktionen unterzogen werden. Bevorzugt wird diese Umsetzung direkt im gleichen Reaktionskessel durchgeführt. Somit können die Materialien bezüglich ihrer OH-Zahl und ihrer Kompatibilität mit herkömmlichen Polyetherpolyolen auf einfachste Weise weiter modifiziert werden. Geeignete Alkylenoxide sind beispielsweise Ethylenoxid, Propylenoxid, 1,2- bzw. 2,3-Butylenoxid und Styroloxid. Bevorzugt werden Propylenoxid und Ethylenoxid einzeln oder als Gemische verwendet. Die Polyadditionsreaktion kann sowohl durch Lewissäuren wie BF₃O(Et)₂ oder B(C₆F₅)₃ als auch durch Basen wie Alkali- oder Erdalkalimetallhydroxide, als auch durch so genannte Doppelmetallcyanidkomplexkatalysatoren (DMC-Komplexkatalysatoren) katalysiert werden. Letztere sind bevorzugt, da die Esterbindungen der nach den oben beschriebenen Verfahren erhältlichen Starterverbindungen unter den Bedingungen der DMC-Katalyse keinen störenden Nebenreaktionen unterliegen. Die Eignung von DMC-Katalysatoren erweist sich jedoch insbesondere vor dem Hintergrund der Lehre von US 5099075. als völlig überraschend, da dort die effektive Beseitigung und Desaktivierung von DMC-Katalysatorresten mit geringen Mengen an Wasserstoffperoxid bei erhöhten Temperaturen beschrieben wird.

Für das erfindungsgemäße Verfahren geeignete DMC-Komplexkatalysatoren sind im Prinzip bekannt. Kommerzielles Interesse haben DMC-Katalysatoren vor allem für die Herstellung von Polyetherpolyolen durch Polyaddition von Alkylenoxiden an aktive Wasserstoffatome aufweisende Starterverbindungen gefunden, wie in US 3 404 109, US 3 829 505, US 3 941 849 und US 5 158 922 beschrieben, da der Einsatz der DMC-Katalysatoren eine Reduzierung des Anteils an monofunktionellen Polyethern mit endständigen Doppelbindungen, so genannten Monoolen, im Vergleich zu der konventionellen Herstellung von Polyetherpolyolen mittels Alkali-Katalysatoren bewirkt. Außerdem überstehen basenempfindliche funktionelle Gruppen wie beispielsweise Carbonylfunktionen oder die bereits erwähnten Estergruppen DMC-katalysierte Alkylenoxidadditionsreaktionen unversehrt. Verbesserte DMC-Katalysatoren, die wie in US 5 470 813, EP-A 700 949, EP-A 743 093, EP-A 761 708; WO-A 97/40086, WO-A 98/16310 und WO-A 00/47649 beschrieben sind, besitzen zudem eine außerordentlich hohe Aktivität und ermöglichen die Polyetherpolyolherstellung bei sehr geringen Katalysatorkonzentrationen von 25 ppm oder weniger, so dass eine Abtrennung des Katalysators aus dem fertigen Produkt nicht mehr erforderlich ist. Ein typisches Beispiel sind die in EP-A 700 949 beschriebenen hochaktiven DMC-Katalysatoren, die neben einer Doppelmetallcyanid-Verbindung wie Zinkhexacyanocobaltat(III) und einem organischen Komplexliganden wie tert.-Butanol noch einen Polyether mit einem zahlenmittlerem Molekulargewicht größer als 500 g/mol enthalten.

Vor dem Start der Alkylenoxidzugabe können dem nach den Schritten a), b) und c) modifizierten Triglycerid auch noch andere zur Addition von Alkylenoxiden befähigte Verbindungen zugesetzt werden, mit deren Hilfe beispielsweise Funktionalität und / oder Hydrophilie des Endproduktes eingestellt werden können. Solche Starterverbindungen weisen bevorzugterweise Funktionalitäten von 2 - 8 auf. Beispiele sind Propylenglykol, Ethylenglykol, Diethylenglykol, 1,2-, 1-,3-, 1,4-Butandiol, Hexandiol, Pentandiol, 3-Methyl-1,5-pentandiol, 1,12-Dodecandiol, Glycerin, Trimethylolpropan, Triethanolamin, Pentaerythrit, Sorbitol, Saccharose, Hydrochinon, Brenzcatechin, Resorcin, Bisphenol F, Bisphenol A, 1,3,5-Trihydroxybenzol, methylolgruppenhaltige Kondensate aus Formaldehyd und Phenol oder Melamin oder Harnstoff, sowie Mannichbasen. Beispiele für gegebenenfalls zugesetzte Mono- oder Polyamine sind Ethylendiamin, 1,3-Diaminopropan, 1,4-Diaminobutan, Hexamethylendiamin, Ethanolamin, Diethanolamin, Diethylentriamin, Anilin, Piperazin, die Isomere des Toluoldiamins und die Isomere des (Diaminodiphenyl)methans. Bevorzugt werden aminogruppenfreie Costarter zugesetzt. Die Costarter können auch in einem vorgeschalteten Schritt durch Alkylenoxidaddition bereits vorverlängert worden sein, beispielsweise um sie zu verflüssigen oder ihre Verträglichkeit mit dem Reaktionsgemisch zu erhöhen.

Geeignete zusätzliche Starterverbindungen sind auch Poly(ester)polyole, welche beispielsweise aus organischen Dicarbonsäuren mit 2 bis 12 Kohlenstoffatomen und mehrwertigen Alkoholen, vorzugsweise Diolen, mit 2 bis 12 Kohlenstoffatomen, vorzugsweise 2 bis 6 Kohlenstoffatomen hergestellt werden können. Als Dicarbonsäuren kommen hierfür beispielsweise in Betracht: Bernsteinsäure, Glutarsäure, Adipinsäure, Korksäure, Azelainsäure, Sebacinsäure, Decandicarbonsäure, Dodecandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäure-mono und/oder -diester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20 bis 35 / 40 bis 60 / 20 bis 36 Gew.-Teilen und insbesondere Adipinsäure. Beispiele für zwei- und mehrwertige Alkohole sind Ethandiol, Diethylenglykol, 1,2- bzw. 1,3-Propandiol, Dipropylenglykol, Methyl-1,3-Propandiol, 1,4-Butandiol, 1,5-Pentandiol, 3-Methyl-1,5-pentandiol, 1,6-Hexandiol, Neopentylglykol, 1,10-Decandiol, 1,12-Dodecandiol, Glycerin, Trimethylolpropan und Pentaerythrit. Vorzugsweise verwendet werden 1,2-Ethandiol, Diethylenglykol, 1,4-Butandiol, 1,6-Hexandiol, Glycerin, Trimethylolpropan oder Mischungen aus mindestens zwei der genannten Diole, insbesondere Mischungen aus Ethandiol, 1,4-Butandiol und 1,6-Hexandiol, Glycerin und/oder Trimethylolpropan. Eingesetzt werden können ferner Polyesterpolyole aus Lactonen z.B. ε-Caprolacton oder Hydroxycarbonsäuren, z. B. Hydroxycapronsäure und Hydroxyessigsäure.

Zur Herstellung solcher Poly(ester)polyole können die organischen, aromatischen oder aliphatischen Polycarbonsäuren und/oder -derivate und mehrwertigen Alkohole katalysatorfrei oder in Gegenwart von Veresterungskatalysatoren, zweckmäßigerweise in einer Atmosphäre aus Inertgasen, wie Stickstoff, Helium oder Argon und auch in der Schmelze bei Temperaturen von 150°C bis 300°C, vorzugsweise 180°C bis 230°C, gegebenenfalls unter vermindertem Druck bis zu den gewünschten Säure- und OH-Zahlen polykondensiert werden. Die Säurezahl ist vorteilhafterweise kleiner als 10 mg KOH / g, vorzugsweise kleiner als 2,5 mg KOH / g.

Nach einem bevorzugten Herstellverfahren wird das Veresterungsgemisch bei den oben genannten Temperaturen bis zu einer Säurezahl von 80 bis 30, vorzugsweise 40 bis 30, unter Normaldruck und anschließend unter einem Druck von kleiner als 500 mbar, vorzugsweise 1 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation von aromatischen oder aliphatischen Carbonsäuren mit mehrwertigen Alkoholen kann jedoch auch in flüssiger Phase in Gegenwart von Verdünnungs- und/oder Schleppmitteln, wie z.B. Benzol, Toluol, Xylol oder Chlorbenzol, zur azeotropen Abdestillation des Kondensationswassers durchgeführt werden.

Das zum Erhalt einer gewünschten OH-Zahl, Funktionalität und Viskosität zu wählende Verhältnis von Dicarbonsäure(derivat) und mehrwertigem Alkohol und die zu wählenden Alkoholfunktionalitäten können vom Fachmann in einfacher Weise ermittelt werden.

Geeignete Costarter sind ferner Hydroxygruppen aufweisende Poly(carbonat)e. Als Hydroxygruppen aufweisende Poly(carbonat)e kommen solche der an sich bekannten Art in Betracht, die beispielsweise durch Umsetzung von Diolen, wie 1,2-Propandiol, 1,4-Butandiol, 1,6-Hexandiol, Diethylenglykol, Triethylenglykol, Tetraethylenglykol oligo-Tetramethylenglykol und/oder oligo-Hexamethylenglykol mit Diarylcarbonaten und/oder Dialkylcarbonaten, z. B. Diphenylcarbonat, Dimethylcarbonat sowie α-ω-Bischloroformiaten oder Phosgen hergestellt werden können.

Die Addition von Alkylenoxiden an die oben beschriebenen Oxidationsprodukte von Triglyceriden und gegebenenfalls zugesetzte Costarter kann bis zur Erreichung einer beliebig niedrigen OH-Zahl fortgeführt werden. Bevorzugt ist der OH-Zahl-Bereich von 5 mg KOH / g - 200 mg KOH / g. Werden verschiedene Alkylenoxide verwendet, so können diese entweder als Mischung oder nacheinander zudosiert werden. Bei letzterer Dosierweise besitzen die an die Oxidationsprodukte der Triglyceride angebundenen Poly(ether)ketten Blockstrukturen. Bevorzugt werden als Endblock reines Ethylenoxid oder Mischungen aus Propylenoxid und Ethylenoxid mit hohem Ethylenoxidanteil zudosiert, so dass die an die modifizierten Triglyceride und die ggf. zugesetzten Costarterverbindungen angebundenen Poly(ether)ketten 40 bis 100 % primäre OH-Endgruppen aufweisen.

Nach dem erfindungsgemäßen Verfahren liegen die als Starter für die Alkylenoxidadditionsreaktion eingesetzten oxidierten Triglyceride und gegebenenfalls weitere Costarter bereits im Reaktor vor, der Starter oder das Startergemisch bzw. Teile desselben können dem Reaktor aber auch während der Reaktion gemeinsam mit dem (den) Alkylenoxid(en) kontinuierlich zugeführt werden. Bei letzterer Verfahrensweise wird im Reaktor üblicherweise bereits ein Additionsprodukt aus Starter und Alkylenoxid vorgelegt. Dies kann das herzustellende Produkt sein, es ist aber auch möglich ein auf Basis eines anderen Starters hergestelltes Alkylenoxidadditionsprodukt vorzulegen. Nach Zudosierung der Reagenzien schließt sich eine Nachreaktionsphase an, in der der Verbrauch an Alkylenoxid im Allgemeinen durch Überwachung des Drucks quantifiziert wird. Nach Erreichen von Druckkonstanz kann das Produkt, gegebenenfalls nach einer Ausheizphase, abgelassen werden.

Es ist ebenso möglich, Reaktionsprodukt kontinuierlich dem Reaktor zu entnehmen, hierbei muss neben Alkylenoxid und oxidiertem Triglycerid und gegebenenfalls zu verwendenden weiteren Costartern auch Katalysator kontinuierlich zudosiert werden. Die verschiedenen Verfahrensvarianten bei der Herstellung von Polyethern nach den Alkylenoxidadditionsverfahren unter DMC-Komplexkatalyse sind beschrieben im oben angeführten Stand der Technik sowie in WO-A 97/29146 und WO-A 98/03571.

Die DMC-katalysierte Polyaddition von Alkylenoxiden erfolgt im Allgemeinen bei Temperaturen von 20°C bis 200°C, bevorzugt im Bereich von 40°C bis 180°C, besonders bevorzugt bei Temperaturen von 50°C bis 150°C. Die Reaktion kann bei Gesamtdrücken von 0,0001 bar bis 20 bar durchgeführt werden. Die Polyaddition kann in Substanz oder einem inerten, organischen Lösungsmittel, wie Toluol und/oder THF, durchgeführt werden. Die Menge an Lösungsmittel beträgt üblicherweise 10 Gew.-% bis 30 Gew.-%, bezogen auf die Menge des herzustellenden Endproduktes.

Die Katalysatorkonzentration wird so gewählt, dass unter den gegebenen Reaktionsbedingungen eine gute Beherrschung der Polyadditionsreaktion möglich ist. Die Katalysatorkonzentration liegt im Allgemeinen im Bereich von 0,0005 Gew.-% bis 1 Gew.-%, bevorzugt im Bereich von 0,001 Gew.-% bis 0,1 Gew.-%, besonders bevorzugt im Bereich von 0,001 bis 0,05 Gew.-%, bezogen auf die Menge des herzustellenden Endproduktes.

Den nach den Schritten a) bis d) erhaltenen Reaktionsprodukten können ggf. Alterungsschutzmittel wie z. B. Antioxidantien zugesetzt werden.

Die über das erfindungsgemäße Verfahren erhältlichen Polyetherpolyole auf Basis oxidierter Triglyceride können allein oder gegebenenfalls im Gemisch mit weiteren isocyanatreaktiven Komponenten mit organischen Polyisocyanaten, gegebenenfalls in Gegenwart von Treibmitteln, in Gegenwart von Katalysatoren und gegebenenfalls mit weiteren Zusatzstoffen wie Zellstabilisatoren zur Reaktion gebracht werden und so als Komponente zur Herstellung massiver oder geschäumter Polyurethanwerkstoffe verwendet werden.

### Beispiele für die Herstellung der erfindungsgemäßen Polyole auf Basis ungesättigter Triglyceride:

### Verwendeter Katalysator für die Alkylenoxidaddition (DMC-Katalysator):

Doppelmetallcyanid-Katalysator, enthaltend Zinkhexacyanocobaltat, tert.-Butanol und Polypropylenglykol mit einem zahlenmittleren Molekulargewicht von 1000 g/mol; beschrieben in EP-A 700 949
Irganox^{®} 1076:
Octadecyl-3-(3,5-di-tert.butyl-4-hydroxyphenyl)propionat, ein Antioxidationsmittel

### Beispiel 1

604 g Sojabohnenöl (Fa. Aldrich) wurden bei Raumtemperatur unter Inertgas mit 76,4 g Ameisensäure versetzt und unter Rühren auf 40°C erwärmt. 157,2 g Wasserstoffperoxid (30 % ige Lösung in Wasser) wurden unter Rühren während 55 min. zugegeben, wobei die Temperatur bei 40°C bis 50°C gehalten wurde. Nach Ende der Zugabe des Wasserstoffperoxides wurde der Ansatz für 1 h auf 70°C und danach für 8,5 h auf 110°C erwärmt. Der Oxiransauerstoffgehalt betrug 0.01 %. Nach Abdestillation von Wasser und nicht umgesetzter Ameisensäure heizte man das Produkt für 3 h bei 110°C im Vakuum aus. Ausbeute: 665 g.

Das so erhaltene Zwischenprodukt hatte folgende Eigenschaften:
OH-Zahl: 171 mg KOH/g
Säurezahl: 10,9 mg KOH/g
Viskosität bei 25°C: 1240 mPas

Zu 500 g des Zwischenproduktes wurden in einem 10 1 Laborautoklaven 132 mg DMC-Katalysator gegeben. Nachdem das Reaktionsgemisch 1/2 h bei 130°C unter Durchleiten von Stickstoff und Rühren mit 450 U / min. ausgeheizt worden war, wurde der Katalysator bei 130°C durch Zugabe von 50 g Propylenoxid aktiviert (Anfangsdruck: 0,1 bar, Maximaldruck 1,4 bar). Die Aktivierung des Katalysators machte sich durch einen plötzlichen Druckabfall im Autoklaven bemerkbar. Weitere 678,6 g Propylenoxid wurden dem Autoklaven bei 130°C und 450 U / min. über einen Zeitraum von 5,5 h zugeführt. Nach einer Nachreaktionszeit von 30 min. bei 130°C wurde das Alkylenoxidadditionsprodukt 30 min. im Vakuum bei 130°C ausgeheizt. Nach Abkühlen auf 80°C wurden 614 mg Irganox^{®} 1076 zugegeben. Ausbeute: 1224 g.

Das so erhaltene Endprodukt hatte folgende Eigenschaften:
OH-Zahl: 70,4 mg KOH / g
Säurezahl: 18 ppm KOH
Viskosität bei 25°C: 822 mPas

### Beispiel 2

Zu 600,2 g Sojabohnenöl (Fa. Aldrich) wurden bei Raumtemperatur unter Inertgas 152 g Ameisensäure tropfenweise zugegeben. Das Gemisch wurde unter Rühren auf 40°C erwärmt. 312,5 g Wasserstoffperoxid (30 % ige Lösung in Wasser) wurden unter Rühren während 1,5 h zugegeben, wobei die Temperatur bei 40°C - 50°C gehalten wurde. Nach Ende der Zugabe des Wasserstoffperoxides wurde der Ansatz auf 70°C erwärmt und nach Abklingen der exothermen Phase (Temperaturanstieg auf 100°C) 4 h auf Rückflusstemperatur (104°C) gehalten. Der Oxiransauerstoffgehalt betrug 0.01 %. Nach Abdestillation von Wasser und nicht umgesetzter Ameisensäure heizte man das Produkt für 3 h bei 110°C im Vakuum aus. Ausbeute: 665 g.

Das so erhaltene Zwischenprodukt hatte folgende Eigenschaften:
OH-Zahl: 226,3 mg KOH/g
Säurezahl: 8,5 mg KOH/g
Viskosität bei 25°C: 21710 mPas

Zu 500 g des Zwischenproduktes wurden in einem 10 1 Laborautoklaven 161 mg DMC-Katalysator gegeben. Nachdem das Reaktionsgemisch 1/2 h bei 130°C unter Durchleiten von Stickstoff und Rühren mit 450 U / min. ausgeheizt worden war, wurde der Katalysator bei 130°C durch Zugabe von 50 g Propylenoxid aktiviert (Anfangsdruck: 0,1 bar, Maximaldruck 1,8 bar). Die Aktivierung des Katalysators machte sich durch einen plötzlichen Druckabfall im Autoklaven bemerkbar. Weitere 1235,7 g Propylenoxid wurden über einen Zeitraum von 5,5 h dem Autoklaven bei 130°C und 450 U / min. zugeführt. Nach einer Nachreaktionszeit von 3 h bei 130°C wurde das Alkylenoxidadditionsprodukt für 30 min. bei 130°C ausgeheizt. Nach Abkühlen auf 80°C wurden 893 mg Irganox^{®} 1076 zugegeben. Ausbeute: 1775 g.

Das so erhaltene Endprodukt hatte folgende Eigenschaften:
OH-Zahl: 63,5 mg KOH/g
Säurezahl: 32 ppm KOH
Viskosität bei 25°C: 5950 mPas

### Beispiel 3

Zu 1005,6 g Sojabohnenöl (Fa. Rübelmann) wurden bei Raumtemperatur unter Inertgas 127 g Ameisensäure gegeben. Das Gemisch wurde unter Rühren auf 40°C erwärmt. 262,0 g Wasserstoffperoxid (30 % ige Lösung in Wasser) wurden unter Rühren während 1,25 h zugegeben, wobei die Temperatur bei 40 - 50°C gehalten wurde. Nach Ende der Zugabe des Wasserstoffperoxides wurde der Ansatz für 1 h auf 70°C erwärmt und danach 7 h bei 106°C (Rückfluss) gehalten. Der Oxiransauerstoffgehalt betrug 0.05 %. Nach Abdestillation von Wasser und nicht umgesetzter Ameisensäure heizte man das Produkt für 3 h bei 110°C im Vakuum aus. Ausbeute: 1028 g.

Das so erhaltene Zwischenprodukt hatte folgende Eigenschaften:
OH-Zahl: 157,2 mg KOH / g
Säurezahl: 7,25 mg KOH / g
Viskosität bei 25°C: 1170 mPas

Zu 971,2 g des Zwischenproduktes wurden in einem 10 l Laborautoklaven 268 mg DMC-Katalysator gegeben. Nachdem das Reaktionsgemisch 1/2 h bei 130°C unter Durchleiten von Stickstoff und Rühren mit 450 U / min. ausgeheizt worden war, wurde der Katalysator bei 130°C durch Zugabe von 100 g Propylenoxid aktiviert (Anfangsdruck: 0,1 bar, Maximaldruck 1,2 bar). Die Aktivierung des Katalysators machte sich durch einen plötzlichen Druckabfall im Autoklaven bemerkbar. Weitere 1351 g Propylenoxid wurden im Gemisch mit 180 g Ethylenoxid über einen Zeitraum von 2,5 h dem Autoklaven bei 130°C und 450 U / min. zugeführt. Nach einer Nachreaktionszeit von 40 min. bei 130°C wurde das Alkylenoxidaddittonsprodukt für 30 min. bei 130°C ausgeheizt. Nach Abkühlen auf 80°C wurden 1327 mg Irganox^{®} 1076 zugegeben. Ausbeute: 2589 g.

Das so erhaltene Endprodukt hatte folgende Eigenschaften:
OH-Zahl: 58,8 mg KOH / g
Säurezahl: nicht nachweisbar
Viskosität bei 25°C: 920 mPas

### Beispiel 4

Zu 600,6 g Sojabohnenöl (Fa. Rübelmann) wurden bei Raumtemperatur unter Inertgas 152,1 g Ameisensäure gegeben. Das Gemisch wurde unter Rühren auf 40°C erwärmt. 312,5 g Wasserstoffperoxid (30 % ige Lösung in Wasser) wurden unter Rühren während 1,5 h zugegeben, wobei die Temperatur bei 40°C -50°C gehalten wurde. Nach Ende der Zugabe des Wasserstoffperoxides wurde der Ansatz auf 70°C erwärmt und nach Abklingen der exothermen Phase (Temperaturanstieg auf 100°C) 4 h auf Rückflusstemperatur (103°C) gehalten. Der Oxiransauerstoffgehalt betrug weniger als 0,01 %. Nach Abdestillation von Wasser und nicht umgesetzter Ameisensäure heizte man das Produkt für 3 h bei 110°C im Vakuum aus. Ausbeute: 631 g.

Das so erhaltene Zwischenprodukt hatte folgende Eigenschaften:
OH-Zahl: 212,5 mg KOH / g
Säurezahl: 6,95 mg KOH / g
Viskosität bei 25°C: 22800 mPas

Zu 555,6 g des Zwischenproduktes wurden in einem 10 l Laborautoklaven 207 mg DMC-Katalysator gegeben. Nachdem das Reaktionsgemisch 1/2 h bei 130°C unter Durchleiten von Stickstoff und Rühren mit 450 U / min. ausgeheizt worden war, wurde der Katalysator bei 130°C durch Zugabe von 55 g Propylenoxid aktiviert (Anfangsdruck: 0,1 bar, Maximaldruck 1,8 bar). Die Aktivierung des Katalysators machte sich durch einen plötzlichen Druckabfall im Autoklaven bemerkbar. Weitere 1265,1 g Propylenoxid wurden im Gemisch mit 157,7 g Ethylenoxid über einen Zeitraum von 3 h dem Autoklaven bei 130°C und 450 U / min. zugeführt. Nach einer Nachreaktionszeit von 23 min. bei 130°C wurde das Alkylenoxidadditionsprodukt für 30 min. bei 130°C ausgeheizt. Nach Abkühlen auf 80°C wurden 1017 mg Irganox^{®} 1076 zugegeben. Ausbeute: 2023 g.

Das so erhaltene Endprodukt hatte folgende Eigenschaften:
OH-Zahl: 58,4 mg KOH / g
Viskosität bei 25°C: 2280 mPas

### Beispiel 5

Zu 600 g Sojabohnenöl (Fa. Rübelmann) wurden unter Stickstoff bei 70°C über einen Zeitraum von 6 h und 15 min. 198,7 g Essigsäure und 188,0 g Wasserstoffperoxid (als 50 % ige Lösung in Wasser) in jeweils 7 gleichen Portionen gegeben. Man dosierte direkt nach einer Essigsäureportion die jeweilige Wasserstoffperoxidportion. Nach Zugabe der letzten Portion ließ man 1 h bei 70°C nachreagieren und erwärmte das Reaktionsgemisch sodann für 8 h auf Rückflusstemperatur (102°C - 106°C). Der Oxiransauerstoffgehalt betrug 0,05 %. Nach Abdestillation von Wasser und nicht umgesetzter Essigsäure heizte man das Produkt für 3 h bei 110°C im Vakuum aus. Ausbeute: 663 g.

Das so erhaltene Zwischenprodukt hatte folgende Eigenschaften:
OH-Zahl: 201,5 mg KOH / g
Säurezahl: 16,2 mg KOH / g
Viskosität bei 25°C: 7920 mPas

Zu 315,6 g des Zwischenproduktes wurden in einem 2 1 Laborautoklaven 100 mg DMC-Katalysator gegeben: Nachdem das Reaktionsgemisch 1/2 h bei 130°C unter Durchleiten von Stickstoff und Rühren mit 800 U / min. ausgeheizt worden war, wurde der Katalysator bei 130°C durch Zugabe von 31,5 g Propylenoxid aktiviert (Anfangsdruck: 0,1 bar, Maximaldruck 2,1 bar). Die Aktivierung des Katalysators machte sich durch einen plötzlichen Druckabfall im Autoklaven bemerkbar. Weitere 701,5 g Propylenoxid wurden über einen Zeitraum von 4 h und 50 min. dem Autoklaven bei 130°C und 800 U / min. zugeführt. Nach einer Nachreaktionszeit von 40 min. bei 130°C. wurde das Alkylenoxidadditionsprodukt für 30 min. bei 130°C ausgeheizt. Nach Abkühlen auf 80°C wurden 553 mg Irganox^{®} 1076 zugegeben. Ausbeute: 1037 g.

Das so erhaltene Endprodukt hatte folgende Eigenschaften:
OH-Zahl: 60,9 mg KOH / g
Säurezahl: 20,1 ppm KOH
Viskosität bei 25°C: 3552 mPas

### Beispiel 6

Zu 2000 g Sojabohnenöl (Fa. Rübelmann) wurden unter Stickstoff bei 70°C über einen Zeitraum von 6 h 330,2 g Essigsäure und 312,3 g Wasserstoffperoxid (als 50 % ige Lösung in Wasser) in jeweils 7 gleichen Portionen gegeben. Man dosierte direkt nach einer Essigsäureportion die jeweilige Wasserstoffperoxidportion. Nach Zugabe der letzten Portion ließ man 1 h bei 70°C nachreagieren. Es wurden nun 1,32 g Phosphorsäure zugegeben und das Reaktionsgemisch sodann für 7 h auf Rückflusstemperatur (etwa 105°C) erwärmt. Der Oxiransauerstoffgehalt betrug 0,06 %. Nach Abdestillation von Wasser und nicht umgesetzter Essigsäure heizte man das Produkt für 3 h bei 110°C im Vakuum (1 mbar) aus. Ausbeute: 2125 g.

Das so erhaltene Zwischenprodukt hatte folgende Eigenschaften:
OH-Zahl: 150,0 mg KOH / g
Säurezahl: 8,5 mg KOH / g
Viskosität bei 25°C: 870 mPas

Zu 826,4 g des Zwischenproduktes wurden in einem 10 l Laborautoklaven 203 mg DMC-Katalysator gegeben. Nachdem das Reaktionsgemisch 1/2 h bei 130°C unter Durchleiten von Stickstoff und Rühren mit 800 U / min. ausgeheizt, worden war, wurde der Katalysator bei 130°C durch Zugabe eines Gemisches aus 73,5 g Propylenoxid und 9,0 g Ethylenoxid aktiviert (Anfangsdruck: 0,1 bar, Maximaldruck 2,7 bar). Die Aktivierung des Katalysators machte sich durch einen plötzlichen Druckabfall im Autoklaven bemerkbar. Weitere 118,4 g Ethylenoxid und 971,4 g Propylenoxid wurden über einen Zeitraum von 1 h und 23 min. dem Autoklaven bei 130°C und 800 U / min. zugeführt. Nach einer Nachreaktionszeit von 36 min. bei 130°C wurde das Alkylenoxidadditionsprodukt für 30 min. bei 130°C ausgeheizt. Nach Abkühlen auf 80°C. wurden 1,091 mg Irganox^{®} 1076 zugegeben. Ausbeute: 1990 g.

Das so erhaltene Endprodukt hatte folgende Eigenschaften:
OH-Zahl: 62 mg KOH / g
Säurezahl: 19,3 ppm KOH
Viskosität bei 25°C: 909 mPas

In einem Vergleichsbeispiel, welches in der ersten Stufe ohne den Zusatz von Phosphorsäure durchgeführt wurde, musste zum Erreichen von < 0,1 % Oxiransauerstoff im Zwischenprodukt 18 h auf 105°C erhitzt werden. Das Zwischenprodukt hatte eine Säurezahl von 21,1 mg KOH / g. Die nachfolgende Addition von Alkylenoxiden ließ sich nicht durchführen, da der DMC-Katalysator nicht aktiviert werden konnte.

## Patentansprüche

1. Verfahren zur Herstellung von Polyolen auf Basis natürlicher Öle, **dadurch gekennzeichnet, dass**
a) ungesättigte Triglyceride entweder mit Peroxycarbonsäuren oder mit Wasserstoffperoxid unter Katalyse von Carbonsäuren bei Temperaturen von 20°C bis 90°C oxidiert werden, wobei das Molverhältnis von Wasserstoffperoxid zu den oxidierbaren Doppelbindungsäquivalenten 0,2 - 1,5 und das Molverhältnis der katalytisch aktiven Carbonsäure zu den oxidierbaren Doppelbindungsäquivalenten 0,2 - 1,1 beträgt.
b) die gebildeten Epoxidgruppen *in situ* durch Erhöhung der Temperatur auf 90 - 130°C gegebenenfalls unter Zusatz weiterer Polyole in Alkoholgruppen überführt werden,
c) anschließend die unter a) und b) hergestellten Produkte von flüchtigen Bestandteilen im Vakuum bei Temperaturen von 60 - 130°C befreit werden und
d) die unter a) bis c) erhaltenen Produkte ohne weitere Aufarbeitungsschritte mit Alkylenoxiden unter Ringöffnung zu Polyetherpolyolen umgesetzt werden.

2. Verfahren nach Anspruch 1 wobei in Schritt b) zusätzlich noch 100 bis 1000 ppm einer anorganischen Mineralsäure hinzugefügt werden.

3. Verfahren nach einem der Ansprüche 1 oder 2, wobei in Schritt b) zusätzlich noch eine weitere oder mehrere weitere Carbonsäuren bis zum Erreichen eines maximalen Verhältnisses von Carbbnsäuregruppen zu den eingesetzten Wasserstoffperoxidäquivalenten von 1,2 eingesetzt werden können.

4. Verfahren nach einem der Anspruche 1 bis 3 , wobei die Reaktionsschritte a) bis d) in einem einzigen Reaktionskessel durchgeführt werden.

## Claims

1. Process for the production of polyols based on natural oils, **characterised in that**
a) unsaturated triglycerides are oxidised either with peroxycarboxylic acids or with hydrogen peroxide, catalysed by carboxylic acids, at temperatures from 20°C to 90°C, wherein the molar ratio of hydrogen peroxide to the oxidisable double bond equivalents is 0.2 to 1.5 and the molar ratio of the catalytically active carboxylic acid to the oxidisable double bond equivalents is 0.2 to 1.1,
b) the epoxide groups formed are converted to alcohol groups in situ by raising the temperature to 90 to 130°C, optionally with the addition of further polyols,
c) then the products produced in a) and b) are freed from volatile constituents in vacuo at temperatures of 60 to 130°C and
d) with no further processing steps the products obtained in a) to c) are reacted with alkylene oxides with ring opening to form polyether polyols.

2. Process according to claim 1, wherein a further 100 to 1000 ppm of an inorganic mineral acid are additionally added in step b).

3. Process according to either of claims 1 or 2, wherein additionally one or more further carboxylic acids can also be used in step b) until a maximum ratio of carboxylic acid groups to the hydrogen peroxide equivalents used of 1.2 is achieved.

4. Process according to one of claims 1 to 3, wherein reaction steps a) to d) are performed in a single reaction vessel.

## Revendications

1. Procédé pour produire des polyols à base d'huiles naturelles, **caractérisé en ce que**
a) des triglycérides insaturés sont oxydés avec des peroxyacides carboxyliques ou avec le peroxyde d'hydrogène sous catalyse d'acides carboxyliques à des températures de 20°C à 90°C, où le rapport molaire du peroxyde d'hydrogène aux équivalents de doubles liaisons oxydables est 0,2-1,5 et le rapport molaire de l'acide carboxylique catalytiquement actif aux équivalents de doubles liaisons oxydables est 0,2-1,1,
b) les groupes époxydes formés sont convertis en groupes alcools *in situ* par élévation de la température à 90-130°C éventuellement avec addition d'autres polyols,
c) puis, les produits produits en a) et b) sont débarrassés des constituantes volatils sous vide à des températures de 60-130°C et
d) les produits obtenus en a) à c) sont convertis en polyétherpolyols sans autres étapes de traitement avec des oxydes d'alkylène avec ouverture de cycle.

2. Procédé selon la revendication 1 où, dans l'étape b), en outre encore 100 à 1000 ppm d'un acide minéral inorganique sont ajoutées.

3. Procédé selon l'une des revendications 1 et 2 où, dans l'étape b), en outre encore un autre ou plusieurs autres acides carboxyliques peuvent être utilisés jusqu'à l'obtention d'un rapport maximal des groupes acides carboxyliques aux équivalents de peroxyde d'hydrogène utilisés de 1,2.

4. Procédé selon l'une des revendications 1 à 3 où les étapes réactionnelles a) à d) sont réalisées dans un seul récipient réactionnel.
